# EUROPEAN PATENT APPLICATION

(11) **EP 1 981 209 A1**
(43) Date of publication of application: **15.10.2008**
(21) Application number: 06817900.1
(22) Date of filing: 27.11.2006
(51) Int. Cl.: H04L 12/14

(54) **WAP GATEWAY AND METHOD FOR IMPLEMENTING CHARGING CONTROL FOR PREPAID USER**

(30) Priority: 20.12.2005 CN 200510132469
(71) Applicant: Huawei Technologies Co., Ltd., Longgang District, Shenzhen Guangdong 518129 (CN)
(72) Inventor: PENG, Zhiwei, Shenzhen, Guangdong 518129 (CN)
(74) Representative: Thun, Clemens
(86) International application number: PCT/CN2006/003176
(87) International publication number: WO 2007/071152

(57) **Abstract**

A WAP gateway and a method for implementing billing control for prepaid subscribers include: a wireless application protocol WAP gateway interacts related information with a billing system according to different service requests of the prepaid subscriber, and collects and controls related fees according to the interacted information. The method effectively realizes real-time billing, and neatly configures a billing policy, so as to realize flexible billing based on various fee rates and satisfy requirements of the flexible billing of carriers. The method also ensures high efficiency and reliability of the billing by saving billing sessions in the gateway in a certain period of time. When a big file is downloaded, if the flow is pre-deducted and the user does not enjoy substantial service due to various abnormities, the method can roll back the flow.

## Description

### FIELD OF THE INVENTION

The present invention relates to communications, in particular, to a WAP gateway and a method for implementing billing control on prepaid subscribers.

### BACKGROUND

With the development of mobile data services such as the multimedia message service (MMS), location service (LCS), payment service, and wireless application protocol (WAP) browsing, the billing mode is required to solve the billing problems in terms of the communication fee and content fee.

The communication fee refers to the fee that a carrier charges subscribers for network usage when the subscribers use the network constructed by the carrier. The communication fee is normally charged based on flow or time length, or is charged monthly.

The content fee refers to that a content provider charges subscribers for the contents used by the users. The carrier collects the content fee for the content providers. Normally, the content fee is charged based on pieces, flow or time length of the contents, or is charged monthly. The billing mode and rate for the contents are determined through negotiation between the carrier and the content providers.

For the current 2G/2.5G/3G network, the communication fee is collected on SGSN/GGSN/PDSN/NAS, which are defined as the remote access system (RAS) hereinafter, and is uniformly settled through the operation support system (OSS).

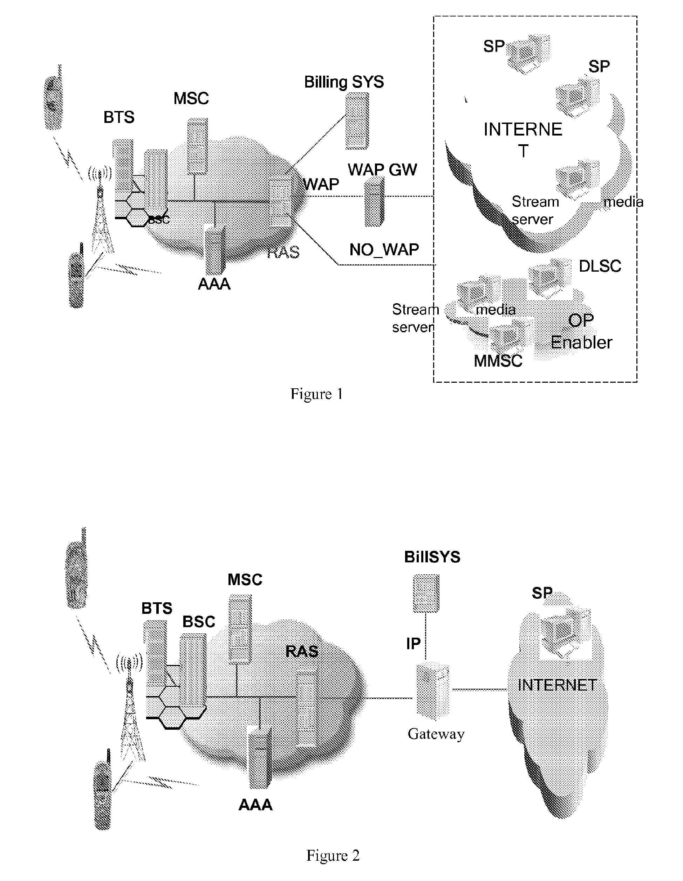

The technical scheme of the related art related to the present invention will be illustrated with reference to FIG. 1 showing a schematic structural view of a conventional network for billing. As shown in FIG. 1, the network includes a base transceiver station (BTS), a base station controller (BSC), a mobile switching center(MSC), an authentication, authorization, and auditing (AAA) server, a RAS, a WAP gateway (WAP GW), a billing system (billing SYS), and an SP/CP.

The WAP GW performs the protocol conversion and proxy functions for the WAP services. The non-WAP services are not processed by the WAP GW, and are directly connected to the SP/CP through the RAS. The billing SYS, which may be realized with multiple devices such as SCP/DSMP/OSS, performs the billing functions for the communication fee and content fee for the pre-paid subscribers, authenticates the SP/CP and subscribers, and realizes the billing and rating of contents.

To realize the billing of the communication fee, the information about the communication fee of a subscriber is collected on the RAS. The information includes the flow, time length, roaming, and the network information about network accessing of the subscriber such as the RAS address and access codes. Then, the billing of the communication fee of the subscriber is performed according to the collected information.

To realize the billing of the content fee, the WAP GW or the SP/CP obtains the IP address of a subscriber from data packets, queries and obtains the Mobile Station International ISDN Number(MSISDN) of the calling party corresponding to the IP address of the subscriber from a billing packet forwarded by the AAA server based on the Remote Authentication Dial In User Service (RADIUS) protocol, and then sends the MSISDN to the SP/CP. The SP/CP then performs the billing of the content fee according to the visiting records of the subscriber corresponding to the MSISDN.

In addition, the billing of the content fee can be performed according to the (Uniform Resource Locator (URL) or the characteristic values such as the service ID (SERVERID) and SP ID (SPID) carried by the URL based on the visiting records of a subscriber.

The SERVERID can be added to the URL through the SP/CP, or can be added through the PORTAL. When the SERVERID is added through the PORTAL, the PORTAL must be accessed first, and the characteristic values are carried in the URL in the link returned by the PORTAL.

It is known from the technical scheme of the related art that the RAS of the related art collects the flow of the network layer instead of the flow of the application layer. Therefore, in the related art, the flows of different applications cannot be charged at different rates, and the real-time billing cannot be achieved. In addition, the collection points for different billing modes are different. For example, the flow is collected on the RAS when the billing based on the flow is adopted, but is normally collected in the CP gateway when the billing based on the content is adopted, and the GPRS flow is also generated to send an MMS. Currently, it is difficult to perform the billing based on the flow according to different services, and cross billing may occur if one billing mode is adopted for a part of the services while other billing modes are adopted for other services.

When the billing based on the flow and the billing based on the content are adopted at the same time, the related art cannot realize the billing for different situations, and only support some simple billing modes, such as monthly payment based on content and monthly payment based on flow. Therefore, the related art is not flexible enough, and cannot guarantee the efficient and reliable billing.

### SUMMARY

Accordingly, the present invention provides a WAP gateway and a method for implementing billing control for prepaid subscribers, which realize the real-time billing and the cross billing based on the flow and content for the prepaid subscribers.

The present invention is realized through the following technical scheme.

A method for implementing billing control for prepaid subscribers is provided. The method includes the following steps.

A WAP gateway interacts corresponding information with a billing system according to different service requests of a prepaid subscriber, and collects and controls related fees according to the interacted information.

The billing system pre-deducts a corresponding application fee from an account of the subscriber according to the rating and authentication request.

A method for implementing billing control for prepaid subscribers by a WAP gateway is provided. The method includes the following steps.

The WAP gateway collects and controls fee information for billing based on at least one of flow and content for the prepaid subscriber according to a configured billing policy and different service requests of the prepaid subscriber.

A WAP gateway is provided. The WAP gateway includes a first unit for configuring a billing policy, and a second unit for collecting and controlling fee information for billing based on at least one of the flow and content according to the configured billing policy.

A system for implementing billing control on prepaid subscribers is provided. The system includes a WAP gateway for receiving a service request from a subscriber and establishing a connection among a service provider (SP) , a billing system and the subscriber, and a billing system for interacting with the WAP gateway and returning a response message of pre-deduction and reservation.

It is known from the technical scheme of the present invention that the WAP gateway is used to collect and control the flow billing mode and the control billing mode, which realizes multiple billing modes, and realizes the cross billing based on the flow and the content. In addition, the WAP gateway stores a billing session in a certain period of time, which guarantees the efficiency and reliability of the billing, and realizes the real-time billing of the prepaid subscriber. Meanwhile, when a big file is downloaded, if the flow is pre-deducted but the subscriber does not enjoy substantial services, the present invention can roll back the flow.

Furthermore, the present invention configures different billing rates on the gateway, so as to realize the flexible billing of the various rates and satisfy the requirements on flexible billing of the carrier.

### BRIEF DESCRIPTION OF THE DRAWING(S)

FIG. 1 is a schematic structural view of a billing network of the related art;

FIG. 2 is a schematic view of a networking according to an embodiment of the present invention;

FIG. 3 is a timing diagram of a billing purely based on the flow realized based on the WAP gateway according to an embodiment of the present invention; and

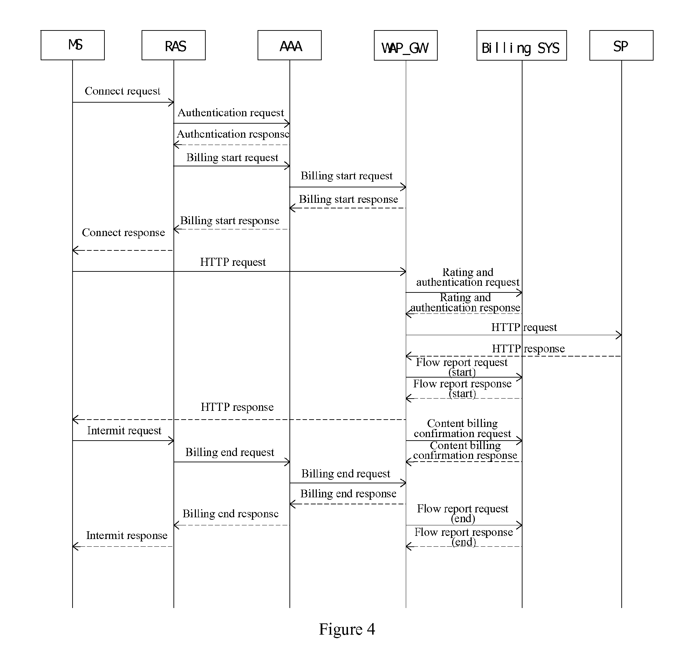

FIG. 4 is a timing diagram of a cross billing based on the flow and the content realized based on the WAP gateway according to an embodiment of the present invention.

### DETAILED DESCRIPTION

Embodiments of the present invention provide and a method for implementing billing control for prepaid subscribers. A wireless application protocol (WAP) gateway interacts related information with a billing system according to different service requests of the prepaid subscriber, and collects and controls related fees according to the interacted information.

FIG. 2 shows a networking structure of the present invention, including an RAS system, a WAP gateway (WAP GW), a billing system (Billing SYS), an AAA server, and a wireless network. The WAP GW is connected with the RAS system, interacts with an SP through the wireless network, and communicates with the billing system through the IP protocol.

The RAS system connects wireless access devices and the wireless network to a computer network.

The Billing SYS system performs the billing of the communication fee and content fee of the prepaid subscriber, and authenticates the SP/CP and the subscriber, and performs the billing and rating of the content.

The WAP GW resolves the protocols, collects the communication fee or content fee, generates a bill, and reports to the prepaid subscriber in real time.

The AAA server authenticates the subscriber and forwards billing packets.

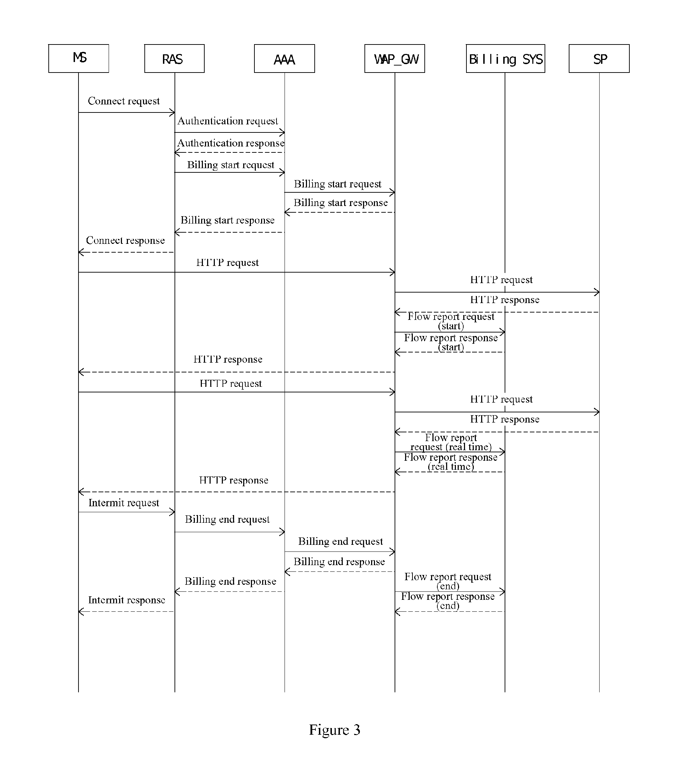

Based on the above networking, the first embodiment of the present invention realizes the billing purely based on the flow on the basis of the WAP gateway. The timing diagram of the embodiment is as shown in FIG. 3.

Before performing the billing based on the flow, different billing policies, for example, how to perform the billing based on the flow in the case of access failure of the subscriber,are configured on the gateway. Then, the subscriber establishes a connection with the WAP gateway, and then with the SP. After the connection is established, the subscriber performs the authentication and starts to report the billing through the MS. The detailed process is described as follows.

In Step 1, the MS requests the RAS for activating the connection.

In Step 2, the RAS sends a request based on the RADIUS protocol to the AAA server, and the AAA server sends an authentication response message to the RAS after the authentication of the request succeeds.

In Step 3, the RAS sends a billing start request based on the RADIUS protocol to the WAP GW through the AAA server. The AAA server forwards the corresponding request to the WAP GW. If the authentication succeeds, the WAP GW sends a billing start response message to the RAS through the AAA server. After receiving the billing start response message, the RAS sends a connect response to the MS.

After the above steps, the subscriber is connected to the WAP GW. Then, the WAP GW reports the billing based on the flow according to the request of the subscriber, and the details are described as follows.

In Step 4, the subscriber sends a first HTTP request to the WAP GW through the MS.

In Step 5, the WAP gateway forwards the HTTP request of the subscriber to the SP.

In Step 6, the SP returns a corresponding response message to the WAP gateway according to the received HTTP request.

In Step 7, when receiving the response message from the SP, the WAP gateway processes the response message, and obtains the total flow generated by the request of the subscriber.

When the subscriber initiates a service request with a small data volume, the gateway obtains the complete response content from the SP, and then delivers the response content. The gateway registers the response content firstly, and obtains the total flow generated by the request of the subscriber according to the content information in the response message.

When the subscriber initiates a service with a large data volume, limited by the system space, the gateway, instead of obtaining the complete response content from the SP and then delivering the content, delivers the data to a terminal at the same time of obtaining the data. The processing method that the gateway is carried out for solving the above problem is described as follows.

After obtaining the response message from the SP, the WAP gateway determines whether the length of the response content can be resolved from the response header of the response message.

When it is determined that the length of the response content can be resolved from the response header of the response message, the total flow generated by the request of the subscriber is calculated according to the length of the response content.

When it is determined that the length of the response content (for example, Chunk code) cannot be resolved from the response header of the response message, the gateway resolves the end mark of the response message, and calculates the length of the response content according to the end mark. Then, the total flow generated by the request of the subscriber is calculated according to the length of the response content.

The small data volume and large data volume can be pre-defined according to the actual network conditions. For example, a service with a certain range of flow is defined as the service with a small data volume, and a service with a flow exceeding the range is defined as the service with a large data volume.

After the following steps, the gateway obtains the total flow generated by the request of the subscriber according to the response message returned from the SP. Then, the gateway controls the flow billing for the prepaid subscriber according to the total flow. The detailed implementation includes the following two situations.

The first situation is that the gateway detects a flow size is not reserved for the subscriber, which includes the following steps.

In Step 8, the gateway applies for establishing a flow billing session to the billing system through a flow billing message, and requests the billing system to reserve the flow.

In Step 9, the billing system returns information about a size of the reserved flow according to the flow billing message reported by the gateway in real time.

In Step 10, after receiving the message returned from the billing system, the gateway records the reservation information, delivers the content requested by the subscriber to the subscriber, and accumulates the flow.

The second situation is that the gateway detects a flow size is reserved for the subscriber, which is normally applicable to the second HTTP request sent by the subscriber to the gateway, and includes the following steps.

In Step 8', the gateway determines whether the reserved available flow is smaller than the total flow generated by the request of the subscriber. If so, Step 9' is performed; otherwise, Step 11' is performed.

In Step 9', the accumulated total flow is reported to the billing system in real time through a flow billing message, and the gateway applies for reserving a flow again to the billing system, and then Step 10' is performed.

In Step 10', the billing system returns information about a size of the reserved flow according to the flow billing message reported by the gateway in real time.

In Step 11', after receiving the message returned from the billing system, the gateway records the reservation information, delivers the response content requested by the subscriber to the subscriber, and accumulates the flow.

In the above two situations, the gateway can expand the flow billing information, and actively apply for reserving a specified flow size to the billing system. This process is applicable when the flow generated by the request of the subscriber is very large. Through the reserved flow, the subscriber can reserve enough flow for this request in one interaction.

In Step 8, the detailed operation when the WAP gateway applies for establishing the flow billing session to the billing system is described as follows.

1. When the frequency of fee rate switching for the service requests initiated by the subscriber exceeds the specified threshold, for each of the service requests of different fee rates, the gateway establishes a flow billing session with the billing system, and saves the billing session for a certain period of time. If it is detected that any one of the billing sessions generates no flow within a certain period of time, the billing session is terminated.

The subscriber may access the contents he or she is interested in the course of browsing, and may jump between different SPs at any time, so the fee rate switching is often frequent. The gateway establishes a billing session for each of the fee rate, and saves the billing session for a certain period of time. If a billing session does not generate any flow within a certain period of time, the billing session is terminated, so the waste of money is prevented. Thus, even if the fee rate switching is frequent when the subscriber accesses the contents, the gateway does not need to establish new billing sessions with the billing system, so the response speed is improved.

2. When the subscriber initiates a service request with a large data volume, the gateway establishes a dedicated flow billing session with the billing system through a flow billing message according to the service request with a large data volume initiated by the subscriber.

3. When multiple service requests initiated by the subscriber have the same fee rate, the gateway establishes a flow billing session according to the multiple service requests with the same fee rate of the subscriber.

The above situation is based on the concurrent requests. At this time, the terminal can establish multiple connections with the gateway at the same time, and the gateway processes the connections concurrently. If the multiple connections access pages with the same fee rate, the gateway does not need to establish a billing session for each connection, but can share the same billing session. However, the problem brought about by the concurrent processing is that the reported flow cannot be rolled back, so it is required to achieve the balance between the accuracy and efficiency of the billing. Therefore, the gateway must have special processing for the service with a large flow to control the errors of the flow billing within a certain range.

After the above steps, the WAP gateway can implement the billing control for the prepaid subscriber in real time. When the MS requests deactivation, the present invention performs a billing end report process, and the details are described as follows.

In Step 11, the MS requests the deactivation.

In Step 12, the RAS sends a billing end request to the WAP GW through the AAA server.

In Step 13, the WAP GW collects the pure flow information. If the information is about a prepaid subscriber, the WAP GW reports the collected flow information to the billing system.

In Step 14, the billing system returns a response message according to the reported information.

In Step 15, the gateway processes the received response message, and generates a bill of the flow billing.

In Step 16, the gateway deactivates the MS, and the process is ended.

Based on the networking of FIG. 2, in another embodiment of the present invention the billing purely based on the content is realized based on the WAP gateway. Various billing policies are configured in the gateway before the billing. Then, the subscriber establishes a connection with the SP, that is, the subscriber performs the authentication and starts to report the billing through the MS. This process is the similar to the related description in the first embodiment, and will not be described in detail herein again.

After the subscriber establishes the connection with the SP, the process for implementing the billing based on the content on the basis of the WAP gateway is described as follows.

In Step 101, the subscriber initiates a service request.

In Step 102, the gateway analyzes the request. When it is determined that the service requested by the subscriber is a content service, the gateway initiates a rating and authentication request to the billing system.

In Step 103, the billing system pre-deducts a corresponding application fee from an account of the subscriber according to the rating and authentication request.

If the pre-deduction succeeds, the billing system sends a response message indicating that the pre-deduction succeeds back to the gateway, and Step 104 is performed.

If the pre-deduction fails, the billing system sends a response message indicating that the pre-deduction fails back to the gateway, and the gateway prohibits the subscriber from accessing the service according to the message.

In Step 104, after receiving the response message indicating that the pre-deduction succeeds, the gateway delivers the content requested by the subscriber to the subscriber. After the above steps, the WAP gateway can implement the billing control for the prepaid subscriber in real time. When the MS requests deactivation, the present invention performs a billing end report process. The detailed implementation process is similar to that described in the first embodiment, and will not be described in detail herein again.

Based on the networking of FIG. 2, in another embodiment of the present invention, the cross billing based on the flow and content is realized based on the WAP gateway. Various billing policies are configured in the gateway before the billing. Then, the subscriber establishes a connection with the SP, that is, the subscriber performs the authentication and starts to report the billing through the MS. This process is the similar to the related description of the first embodiment, and will not be described in detail herein again.

After the subscriber establishes the connection with the SP, the process for implementing the billing based on the content on the basis of the WAP gateway is described as follows.

In Step 201, the subscriber initiates a service request.

In Step 202, the gateway analyzes the request. When it is determined that the service requested by the subscriber includes a content service, the gateway initiates a rating and authentication request to the billing system.

In Step 203, the billing system pre-deducts the corresponding application fee from the account of the subscriber according to the rating and authentication request. If the pre-deduction succeeds, the billing system sends a response message indicates that the pre-deduction succeeds back to the gateway, and Step 204 is performed. If the pre-deduction fails, the billing system sends a response message indicating that the pre-deduction fails back to the gateway, and the gateway prohibits the subscriber from accessing the service after receiving the message indicating that the pre-deduction fails.

In Step 204, after receiving the response message indicating the pre-deduction succeeds sent back by the billing system, the gateway forwards an HTTP service request of the subscriber to the SP.

In Step 205, the SP returns a corresponding response message to the WAP gateway according to the received HTTP request.

In Step 206, after receiving the response message from the SP, the WAP gateway processes the response message, and obtains information about the total flow generated by the request of the subscriber.

In Step 207, the gateway controls the billing based on the flow and the billing based on the content for the prepaid subscriber. The detailed implementation includes the following two situations.

The first situation is that the gateway detects a flow size is not reserved for the subscriber, which includes the following steps.

In Step I, the WAP gateway applies for establishing a billing session to the billing system through a flow billing request message, and requests to reserve the flow.

In Step II, the billing system reserves the flow according to the flow billing request message. If the flow is reserved successfully, the information about the reserved flow size is returned, and Step III is performed; otherwise, a response message indicating that the reservation fails is sent to the gateway, and Step IV is performed.

In Step III, the gateway delivers the information about the content that the subscriber is able to access and the information about the total flow to the subscriber according to the information returned from the billing system. If the delivery succeeds, the gateway sends a content billing confirmation message (in successful state) to the billing system, and accumulates the flow. If the delivery fails, the gateway sends a content billing confirmation message (in a state of failure) to the billing system, rolls back the flow accumulated in the request, and prohibits the subscriber from accessing the service.

In Step IV, the gateway requests the billing system to roll back the flow billing through a flow billing confirmation message, and prohibits the subscriber from accessing the service.

The second situation is that the gateway detects a flow size is reserved for the subscriber, which includes the following steps.

In Step I, the gateway determines whether the reserved available flow is smaller than the total flow generated by the request of the subscriber. If so, Step II is performed; otherwise, Step IV is performed.

In Step II, the generated total flow is reported to the billing system in real time through a flow billing message, and the gateway applies for reserving a flow again to the billing system, and then Step III is performed.

In Step III, the billing system reserves the flow according to the flow billing request message. If the flow is reserved successfully, the information about the reserved flow size is returned, and Step IV is performed; otherwise, a response message indicating that the reservation fails is sent to the gateway, and Step V is performed.

In Step IV, the gateway delivers the response content requested by the subscriber to the subscriber. If the delivery succeeds, the gateway sends a content billing confirmation message (in successful state) to the billing system, and accumulates the flow. If the delivery fails, the gateway sends a content billing confirmation message (in a state of failure) to the billing system, rolls back the flow accumulated in the request, and prohibits the subscriber from accessing the service.

In Step V, the gateway requests the billing system to roll back the flow billing through a flow billing confirmation message, and prohibits the subscriber from accessing the service.

After the above steps, the WAP gateway can implement the billing control for the prepaid subscriber in real time. When the MS requests deactivation, the present invention performs a billing end report process. The detailed implementation process is similar to that described in the first embodiment, and will not be described in detail herein again.

To sum up, in the present invention, the WAP gateway is used to collect and control the billing based on the flow and the billing based on the content, which realizes multiple billing modes, and realizes the cross billing based on the flow and the content. In addition, the WAP gateway stores a billing session in a certain period of time, which improves the efficiency and reliability of the billing, and realizes the real-time billing of the prepaid subscriber. Meanwhile, when a big file is downloaded, if the flow is pre-deducted but the subscriber does not enjoy substantial service, the present invention can roll back the flow. Furthermore, the present invention configures different billing rates on the gateway, so as to realize the flexible billing of the various rates and satisfy the requirements for flexible billing of the carrier.

Though the present invention has been disclosed above by the preferred embodiments, they are not intended to limit the present invention. Anybody skilled in the art can make some modifications and variations without departing from the spirit and scope of the present invention. Therefore, the protection scope of the present invention falls in the appended claims and their equivalents.

## Claims

1. A method for implementing billing control on prepaid subscribers, comprising:
interacting, by a wireless application protocol (WAP) gateway, corresponding information with a billing system according to different service requests of a prepaid subscriber, and collecting and controlling related fees according to a interacted information.

2. The method according to claim 1, wherein before the WAP gateway interacts the corresponding information with the billing system according to the different service requests of the prepaid subscriber, the method further comprises:
establishing, by the subscriber, a connection with the WAP gateway, and connecting a service provider (SP) and the billing system through the WAP gateway;
initiating, by the subscriber, a service request to the WAP gateway after the connection is established.

3. The method according to claim 2, wherein a billing policy is configured in the WAP gateway in advance.

4. The method according to claim 3, wherein billing modes for different subscribers configured in the WAP gateway in advance comprise billing based on a flow, billing based on a content, or cross billing based on the flow and the content.

5. The method according to claim 4, wherein a means of collecting and controlling the fees processed by the WAP gateway when the billing based on the flow is required comprises:
forwarding, by the WAP gateway, the service request of the subscriber to the SP;
after the WAP gateway obtains a response message from the SP, processing, by the WAP gateway, the response message to obtain a total flow generated by this request of the subscriber;
interacting the corresponding information with the billing system according to the total flow, collecting and controlling the related fees according to the interacted information.

6. The method according to claim 5, wherein, when the service request initiated by the subscriber is within a preset scope of small data volume, the procedure of processing the response message comprises:
after obtaining the response message from the SP, caching, by the WAP gateway, the response message in the gateway, and obtaining a total flow generated by this request of the subscriber according to content information in the response message.

7. The method according to claim 5, wherein, when the service request initiated by the subscriber is within a preset scope of large data volume, the procedure of processing the response message comprises:
after obtaining the response message from the SP, determining, by the WAP gateway, whether a length of a response content can be resolved from a response header of the response message;
calculating and obtaining a total flow generated by this request of the subscriber according to the length of the response content, when determining that the length of the response content can be resolved from the response header of the response message ;
resolving, by the gateway, an end mark of the response message, calculating and obtaining the length of the response content according to the end mark, and calculating and obtaining the total flow generated by this request of the subscriber according to the length of the response content, when determining that the length of the response content cannot be resolved from the response header of the response message.

8. The method according to claim 5, wherein when the WAP gateway detects that an available flow is not reserved for the subscriber, the procedure of interacting the corresponding information with the billing system according to the total flow, and collecting and controlling the related fees according to the interacted information comprises:
applying, by the WAP gateway, for establishing a flow billing session to the billing system through a flow billing message, and requesting the billing system to reserve the flow according to the obtained total flow;
returning, by the billing system, information about a size of the reserved flow according to the flow billing message reported by the WAP gateway in real time;
delivering, by the gateway, a corresponding response content to the subscriber according to the information returned from the billing system, and accumulating the flow.

9. The method according to claim 5, wherein when the gateway detects that an available flow is reserved for the subscriber, the procedure of interacting the corresponding information with the billing system according to the total flow, and collecting and controlling the related fees according to the interacted information comprises:
determining, by the gateway, whether the reserved available flow is smaller than the obtained total flow generated by this request of the subscriber; if so, proceeding to the next step; otherwise, delivering, by the gateway, the response content of this request to the subscriber, and accumulating the flow;
reporting, by the gateway, the accumulated total flow to the billing system in real time, and requesting the billing system to reserve a flow again;
returning, by the billing system, information about a size of the reserved flow according to the flow billing message reported by the gateway in real time;
delivering, by the gateway, the response content of this request to the subscriber, and accumulating the flow.

10. The method according to claim 4, wherein a means of collecting and controlling the fees processed by the WAP gateway when the billing based on the content is required comprises:
analyzing, by the gateway, the service request of the subscriber and if the requested service is determined to be a content service, sending a rating and authentication request to the billing system;
pre-deducting, by the billing system, a corresponding application fee from an account of the subscriber according to the rating and authentication request;
if the pre-deduction fails, sending a response message indicating that the pre-deduction fails back to the gateway, and prohibiting, by the gateway, the subscriber from accessing the service according to the message; if the pre-deduction succeeds, sending, by the billing system, a response message indicating that the pre-deduction succeeds back to the gateway, and proceeding to the next step;
delivering, by the gateway, the content requested by the subscriber to the subscriber after receiving the response message indicating that the pre-deduction succeeds.

11. The method according to claim 4, wherein a means of collecting and controlling the fees processed by the WAP gateway when the cross billing based on the flow and the content is processed comprises:
analyzing, by the gateway, the service request of the subscriber, and if the service requested by the subscriber is determined to include a content service, sending a rating and authentication request to the billing system;
pre-deducting, by the billing system, a corresponding application fee from an account of the subscriber according to the rating and authentication request;
if the pre-deduction fails, sending a response message indicating that the pre-deduction fails back to the gateway, and prohibiting, by the gateway, the subscriber from accessing the service according to the message; if the pre-deduction succeeds, sending, by the billing system, a response message indicating that the pre-deduction succeeds back to the gateway, and processing the response message to obtain information about the content that the subscriber is able to access, and then proceeding to the next step;
forwarding, by the gateway, the service request for browsing HTTP of the subscriber to the SP after receiving the response message indicating that the pre-deduction succeeds sent back from the billing system;
after the WAP gateway obtains a response message from the SP, processing, by the WAP gateway, the response message to obtain information about the total flow generated by this request of the subscriber;
controlling the billing based on the flow and the content according to the obtained information about the content that the subscriber is able to access and the obtained information about the total flow generated by this request of the subscriber.

12. The method according to claim 11, wherein when a flow size is not reserved for the subscriber, the procedure of controlling the billing based on the flow and the content according to the obtained information about the content that the subscriber is able to access and the obtained information about the total flow generated by this request of the subscriber comprises:
applying, by the WAP gateway, for establishing a billing session to the billing system through a flow billing request message, and requesting to reserve the flow;
reserving, by the billing system, the flow according to the flow billing request message; if the flow is reserved successfully, returning, by the gateway, information about a size of the reserved flow, and delivering the response content requested by the subscriber to the subscriber according to the information about the successful reservation returned from the billing system; if the delivery succeeds, sending a confirmation response message on the content billing to the billing system, and accumulating the flow; if the delivery fails, sending a rollback message on the content billing to the billing system, and rolling back the accumulated flow of this request;
otherwise, sending a response message indicating the reservation fails to the gateway, and proceeding to the next step;
requesting, by the gateway, the billing system to roll back the flow billing through a confirmation request message on the flow billing.

13. The method according to claim 11, wherein when a flow size is already reserved for the subscriber, the procedure of controlling the billing based on the flow and the content according to the obtained information about the content that the subscriber is able to access and the obtained information about the total flow generated by this request of the subscriber comprises:
A115: determining, by the gateway, whether the reserved available flow is smaller than the obtained total flow generated by this request of the subscriber; if so, proceeding to Step A 116; otherwise, proceeding to Step A 118;
A116: reporting the accumulated and generated total flow to the billing system through a flow billing message, and applying for reserving a flow to the billing system again;
A 117: reserving, by the billing system, the flow according to the flow billing request message; if the flow is reserved successfully, returning information about a size of the reserved flow size, and proceeding to Step A118; otherwise, sending a response message indicating that the reservation fails to the gateway, and proceeding to Step A 119;
A 118: delivering, by the gateway, the response content requested by the subscriber to the subscriber; if the delivery succeeds, sending a content billing confirmation message on a successful state to the billing system, and accumulating the flow; if the delivery fails, sending a content billing confirmation message on a failed state to the billing system, rolling back the flow accumulated in this request, and prohibiting the subscriber from accessing the service;
A119: requesting, by the gateway, the billing system to roll back the flow billing through a confirmation request message about the flow billing.

14. The method according to claim 8 or 12, wherein when a fee rate switching frequency of service requests initiated by the subscriber exceeds a specified threshold, the procedure of applying for establishing flow billing sessions to the billing system comprises:
On the requests of the subscriber for different fee rates, establishing respectively, by the gateway, the flow billing sessions with the billing system through the flow billing message, and saving the billing sessions for a certain period of time;
terminating a billing session if it is detected that the billing session therein does not generate any flow in a certain period of time.

15. The method according to claim 8 or 12, wherein when the service request initiated by the subscriber is in a preset scope of large data volume, the procedure of applying for establishing the flow billing sessions to the billing system comprises:
establishing, by the gateway, a dedicated flow billing session with the billing system through the flow billing message according to the service request with the large data volume initiated by the subscriber.

16. The method according to claim 8 or 12, wherein multiple service requests initiated by the same subscriber have a same fee rate, the procedure of applying for establishing flow billing sessions to the billing system comprises:
establishing, by the gateway, a same flow billing session with the billing system according to the multiple service requests having the same fee rate of the subscriber.

17. The method according to claim 1, further comprising:
sending, by a remote access system (RAS), a billing end request to the WAP gateway according to a deactivation request of a mobile station (MS);
collecting, by the WAP gateway, flow information according to the billing end request, and reporting the collected flow information to the billing system;
returning, by the billing system, a response message according to the reported information;
processing, by the gateway, the received response message, generating a bill of the flow billing, deactivating the MS, and ending the process.

18. A method for implementing billing control on prepaid subscribers by a WAP gateway, comprising:
configuring a billing policy in the WAP gateway in advance, and collecting and controlling fee information for billing based on flow and/or content for the prepaid subscriber according to different service requests of the prepaid subscriber.

19. The method according to claim 18, wherein billing modes for different subscribers configured in the WAP gateway in advance comprise billing based on a flow, billing based on a content, or cross billing based on the flow and the content.

20. The method according to claim 18 or 19, wherein when the billing based on the flow is required, the method comprises:
forwarding, by the WAP gateway, a service request of the subscriber to a service provider (SP);
when the WAP gateway obtains a response message from the SP, processing, by the WAP gateway, the response message to obtain a total flow generated by this request of the subscriber;
interacting the corresponding information with the billing system according to the total flow, and collecting and controlling the related fees according to the interacted information.

21. The method according to claim 18 or 19, wherein when the billing based on the content is required, the method comprises:
initiating a rating and authentication request to the billing system;
pre-deducting, by the billing system, a corresponding application fee from an account of the subscriber according to the rating and authentication request;
if the pre-deduction fails, sending a response message indicating that the pre-deduction fails back to the gateway, and prohibiting, by the gateway, the subscriber from accessing the service according to the message; if the pre-deduction succeeds, sending, by the billing system, a response message indicating that the pre-deduction succeeds back to the gateway, and proceeding to the next step;
delivering, by the gateway, the content requested by the subscriber to the subscriber after receiving the response message indicating that the pre-deduction succeeds.

22. The method according to claim 18 or 19, wherein when the cross billing based on the flow and the content is processed comprises:
initiating, by the WAP gateway, a rating and authentication request to the billing system;
pre-deducting, by the billing system, a corresponding application fee from an account of the subscriber according to the rating and authentication request;
if the pre-deduction fails, sending a response message indicating that the pre-deduction fails back to the gateway, and prohibiting, by the gateway, the subscriber from accessing the service according to the message; if the pre-deduction succeeds, sending, by the billing system, a response message indicating that the pre-deduction succeeds back to the gateway, and processing, by the gateway, the response message to obtain information about the content that the subscriber is able to access, and then proceeding to the next step;
forwarding, by the gateway, the service request for browsing HTTP of the subscriber to the SP after receiving the response message indicating that the pre-deduction succeeds sent back from the billing system;
after the WAP gateway obtains a response message from the SP, processing, by the WAP gateway, the response message to obtain information about the total flow generated by this request of the subscriber;
controlling the billing based on the flow and the content according to the obtained information about the content that the subscriber is able to access and the obtained information about the total flow generated by this request of the subscriber.

23. A WAP gateway, comprising:
a unit adapted to configure a billing policy;
a unit adapted to collect and control fee information for billing based on flow and/or content.

24. The WAP gateway according to claim 23, further comprising:
a unit adapted to configure a billing mode for the subscriber.
